# EUROPÄISCHE PATENTSCHRIFT

(11) **EP 0 803 752 B1**
(45) Veröffentlichungstag und Bekanntmachung des Hinweises auf die Patenterteilung: **20.08.2003**
(21) Anmeldenummer: 97104769.1
(22) Anmeldetag: 20.03.1997
(51) Int. Cl.: G02B 6/44

(54) **Mehrschichtiger ballistischer Kabelschutz**
Multilayer ballistic cable protection
Protection de câble multicouches balistique

(30) Priorität: 24.04.1996 DE 19616374
(43) Veröffentlichungstag der Anmeldung: 29.10.1997
(73) Patentinhaber: EMS-INVENTA AG, 8002 Zürich (CH)
(72) Erfinder: Hochuli, Martin, Dipl.-Ing. HTL, 7013 Domat/Ems (CH); Dietrich, Robert, Dipl.-Chem. HTL, 7013 Domat/Ems (CH)
(74) Vertreter: OK pat AG

(56) Entgegenhaltungen:
- DE-A- 2 847 384
- DE-A- 3 112 422
- DE-A- 4 020 853
- DE-U- 8 507 698
- PATENT ABSTRACTS OF JAPAN vol. 017, no. 210 (P-1526), 23.April 1993 & JP 04 349408 A (NIPPON TELEGR & TELEPH CORP), 3.Dezember 1992,

## Beschreibung

Die Erfindung betrifft einen mehrschichtigen ballistischen Kabelschutz, insbesondere für optische Nachrichtenkabel.

Optische Nachrichtenkabel, die sich als sog. Luftkabel eignen, sind im Stand der Technik bekannt.

So beschreibt die DE 28 47 384 gegen Hochspannung beständige optische Nachrichtenkabel oder Freileitungen mit einem äusseren kriechstromfesten Kabelmantel, der mit Fäden aus Kunststoff besponnen ist und einer Kabelseele die vollständig In weichgemachten. anvernetzten Kunststoff gebettet ist, welcher als Schutz gegen Feuchtigkeit sämtliche Hohlräume der Kabelkonstruktion ausfüllt und bevorzugt ölig ist.

In der DE G85 07 698 ist ein Strahlung und elektromagnetische Beeinflussung resistentes und zugfestes Lichtwellenleiterkabel geschützt, in dem auf die beschichtete Glasfaser eine deren Längskontraktionen abpuffernde Silikonelastomerschicht aufextrudiert ist, der nach Aussen hin fest aufeinanderliegend eine faserverstärkte Schicht aus fluoriertem Kunststoff, ein zugentlastendes Aramidfasergeflecht und eine Aussenschicht aus fluoriertem Kunststoff oder aus einer bandierten Polyimidfolie folgen.

DE 40 20 853 beansprucht ein Lichtwellenleiterkabel mit erhöhter Dämpfung gegen winderregte Schwingungen als selbsttragendes Luftkabel mit Lichtwellenleiteradern, die um ein Zentralelement aus gegeneinander beweglichen Einzelfilamenten verseilt und von einer Konstruktion aus Innen- und Aussenmantel mit Fasern als Zugentlastungselementen umgeben sind.

In diesen Dokumenten wird der Ballistikschutz nicht erwähnt und auch nicht gesucht.

In der JP 04 349 408 A wird ein ballistik-geschütztes optisches Nachrichtenkabel beschrieben, das besonders gegen Schrotflintenbeschuss durch ein beidseitig kunststoffbeschichtetes Stahlwellrohr als Aussenmantel geschützt wird, in welchem die optischen Fasern In einem genuteten und mit Aramidfasern oder Aramidfasergewebe umwickelten Stab untergebracht sind.

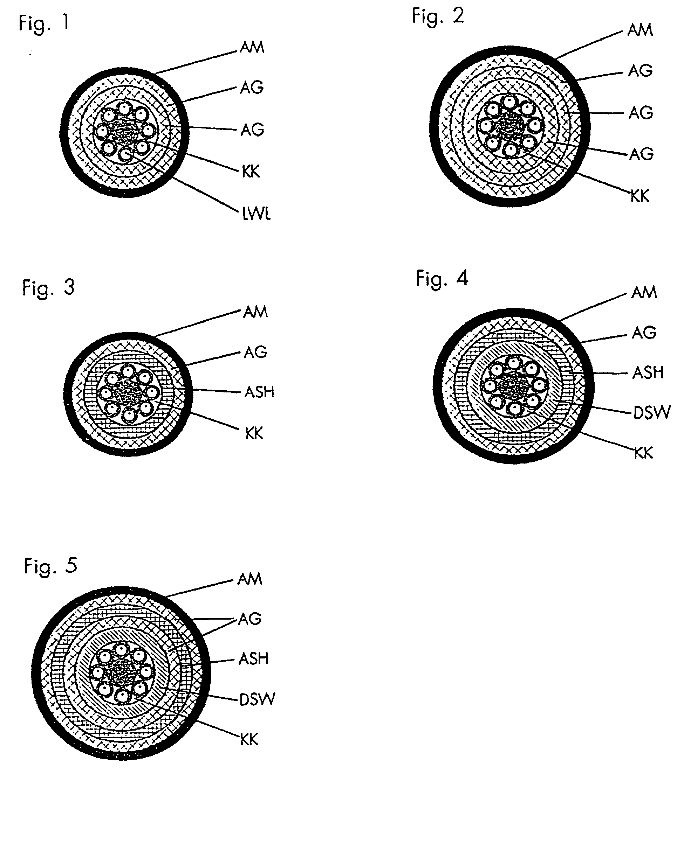

In der Luft hängende Kabel sind wiederholt Ziele von Jägern, die auf Vögel schiessen. Um die empfindlichen Lichtwellenleiter (LWL) optischer Nachrichtenkabel vor einer Beschädigung durch ballistische Geschosse (Schrotladungen) zu schützen, ist es Stand der Technik, die Lichtwellenleitern (LWL) im Kabelkern (KK) mit mehreren Lagen Aramidgewebe (AG) zu schützen. Um eine ausreichende Schutzwirkung zu erhalten, sind mindestens zwei Lagen Aramidgewebe der Stärke 550g/m² notwendig (s. **Fig. 1** und Bezugszeichenliste auf Seite 5). Für einen tatsächlich vollwirksamen Schutz sind sogar drei Lagen Aramidgewebe zu empfehlen **(Fig. 2**).

Der Nachteil dieser Lösung sind ihre hohen Kosten. Ein Kabel mit einem vollständigen Ballistikschutz aus Aramid ist gegenüber einem vergleichbaren, nicht geschützten Kabel mehr als doppelt so teuer.

Der Erfindung liegt die Aufgabe zugrunde, als Kabelschutz einen geeigneten Armierungsaufbau zu finden, der einen gleichwertigen, aber kostengünstigeren Schutz als die aus dem Stand der Technik bekannte Lösung aus mehreren Lagen Aramidgewebe bietet, und ein Kabel mit einem mit einem solchen Kabelschutz zu schaffen.

Diese Aufgabe wird gelöst durch den mehrschichtigen ballistischen Kabelschutz mit den kennzeichnenden Merkmalen des Anspruchs **1.** Sie wird insbesondere durch die teilweise Substitution der nach dem Stand der Technik verwendeten kostenintensiven Faser-Armierungsschichten durch Armierungsschichten aus Kunststoff gelöst.

Die Figuren **1** bis **8** dienen zur Erläuterung der Erfindung.
- **Figur 1:**: Optisches Nachrichtenkabel mit Ballistikschutz aus zwei Lagen Aramidgewebe (gemäss Stand der Technik).
- **Figur 2:**: Optisches Nachrichtenkabel mit Ballistikschutz aus drei Lagen Aramidgewebe.
- **Figur 3:**: Optisches Nachrichtenkabel mit Ballistikschutz aus einer Lage Aramidgewebe und einer Kunststoff-Armierungsschicht
- **Figur 4:**: Variante eines optischen Nachrichtenkabel mit Ballistikschutz aus einer Lage Aramidgewebe, einer Kunststoff-Armierungsschicht und einer Dämpfungsschicht.
- **Figur 5:**: eine weitere Variante eines optischen Nachrichtenkabels mit Ballistikschutz aus einer Lage Armidgewebe, einer Kunststoffschicht und einer, unter einer inneren Fasergewebeschicht liegenden Dämpfungsschicht.
- **Figur 6:**: Prinzipdarstellung der Beschuss-Beurteilungskriterien mittels einer Referenzplatte.
- **Figur 7:**: Schematische Darstellung eines Beschussversuchs-Aufbaus.
- **Figur 8:**: Prinzipdarstellung eines Durchstoss-Versuchs.

Eine bevorzugte Ausführungsform besteht aus einem mehrschichtigen Aufbau aus
a) einer Faserarmierungsschicht, für die bevorzugt Gewebe aus Fasern bezie hunsgweise Filamenten oder längs parallel nebeneinander liegende, unter Zugspannung stehende Fäden, bestehend aus Aramidfasern, Glasfasern, Kohlenstoff-Fasern oder hochfesten Synthesefasern verwendet werden, wobei Aramidfasern bevorzugt sind, und
b) mindestens einer harten schlagzähen oder schlagzäh modifizierten Kunststoff-Armierungsschicht, die bevorzugt aus äusserst schlagzäh modifiziertem Kunststoff besteht, der einen Zug-E-Modul zwischen 200 und 2'000 N/mm² sowie eine Mindest-Kerbschlagzähigkeit nach Charpy von 10 kJ/m ² und eine Mindest-Durchstossenergie von 60 Nm, gemessen in Anlehnung an DIN 53 373, aufweist und bevorzugt aus der Gruppe Polyamide, Polyester, Polyesterelastomere, Polyurethane, ihren Blends sowie ihren Blends mit anderen Kunststoffen aus der Gruppe der Polyolefine ausgewählt ist, wobei Polyamid besonders bevorzugt wird. (**Fig. 3**)

Bevorzugte Ausführungen weisen mindestens eine weitere Dämpfungsschicht aus einem weichen Kunststoff auf, der bevorzugt aus der Gruppe Thermoplast-Elastomere, wie Polyamidelastomere oder Polyesterelastomere und Polyolefine ausgewählt, besonders energieabsorbierend ist und vorteilhaft unter den Schichten a) und b) liegt. (**Fig. 4**). Eine weiche Dämpfungsschicht (c) wird besonders für Nachrichtenkabel mit verseilten Hohladern empfohlen.

Den äussersten Mantel (ÄM) des Kabelschutzes bildet, wie in den bekannten Lösung nach dem Stand der Technik bevorzugt (**Fig. 1 und 2**), mindestens eine äussere Schutzschicht aus Polyolefin.

Eine weitere Variante stellt ein Armierungsaufbau, bestehend aus einem äusseren Aramid-Fasergewebe (AG), einer mittleren Kunststoff-Armierungsschicht (ASH) aus einem relativ harten, schlagzähen oder schlagzäh modifizierten Kunststoff, einem darunter liegenden weiteren Aramidgewebe und wahlweise einer weiteren, darunter liegenden Dämpfungsschicht (DSH) aus einem weichen Kunststoff (**Fig. 5**) dar. Wie schon zuvor bei der Beschreibung der (**Fig. 3**) erwähnt, kann das Aramid-Fasergewebe (AG) auch aus längsparallelen Aramid-Fäden bestehen.

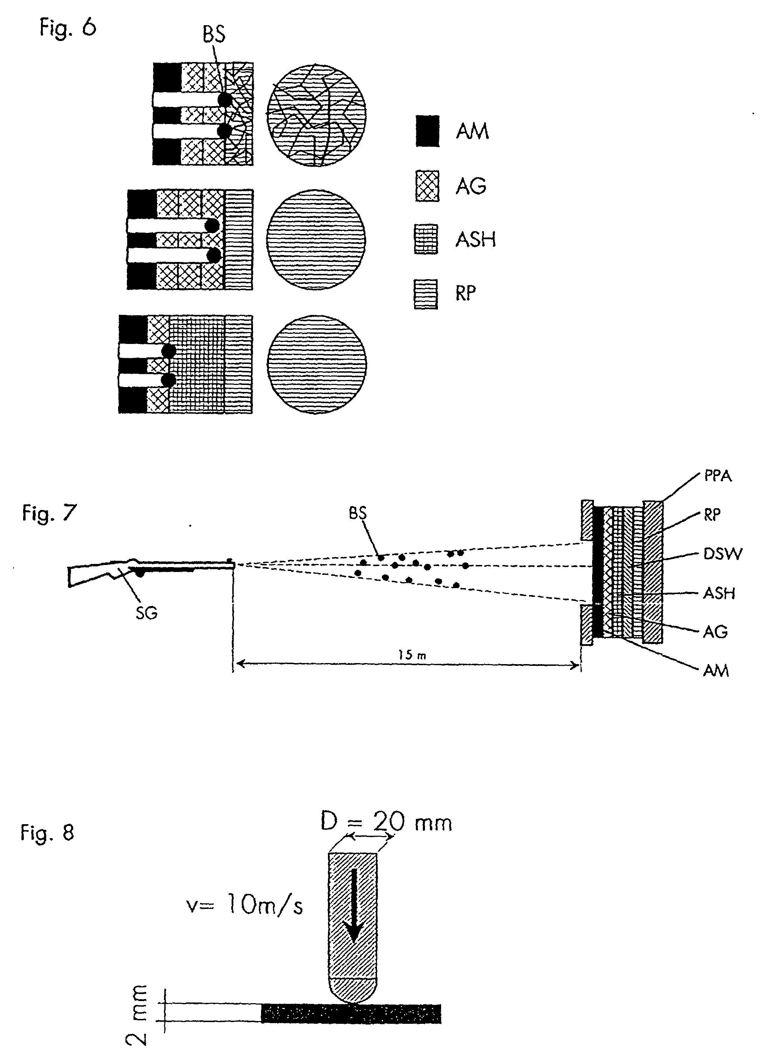

In Beschussversuchen auf Platten konnte nachgewiesen werden, dass eine Armierung aus einer Schicht Aramidgewebe der Stärke 400g/m² mit einer darunter liegenden ca. 1.6mm dicken Armierungsschicht aus einem schlagzähen Polyamid einen gleichwertigen Schutz bietet, wie drei Lagen Aramidgewebe der gleicher Stärke ohne zusätzliche Armierungsschicht aus einem schlagzähen Kunststoff. (**Fig. 6**)

Ein Kabelschutz mit einer wenigstens 1,6 mm starken Kunststoff-Armierungsschicht stellt deshalb eine besonders bevorzugte Ausführungsform dar, während die Dicke dieser Schicht im allgemeinen vorteilhaft mindestens o,5 mm beträgt.

Der Versuchsaufbau wird in **Fig. 7** dargestellt. Mit einem Schrotgewehr (SG), Kaliber 12/70 wird aus 15 m Distanz auf die Prüfplattenaufnahme (PPA) mit Bleischrot (BS) Nr. 5 geschossen. Als erste Platte wird immer eine 0.8 mm dicke Polyethylenplatte (AM) eingelegt. Die letzte Platte, direkt auf der Stahlplatte aufliegend ist aus einem spröden Kunststoff und dient als Referenzplatte (RP). Dazwischen liegen die zu prüfenden Armierungsplatten oder - gewebe. Beurteilt wurden die Eindringtiefe der Schrotkugeln und der Zustand der Referenzplatte. (**Fig. 6**)

Als besonders geeignete Armierungsmaterialien erwiesen sich schlagzähmodifizierte Polyamide mit Zug-E-Modulen im Bereich von 200 - 2000 N/mm² und Kerbschlagzähigkeits-werten gemessen nach Charpy von grösser 10 kJ/m², z. B. Grilamid XE3574® oder Grilon XE3501® der Fa. EMS-CHEMIE AG, Zürich. Ebenfalls geeignet sind schlagzäh modifizierte Polyester, oder schlagzähe Polyurethane und Polyesterelastomere.

Die Beschussversuche zeigten auch, dass in gewissen Fällen die darunterliegenden Lichtwellenleiterhüllen Risse aufwiesen, obwohl die Armierungshüllen von den einzelnen Schrotkugeln nicht durchdrungen wurden.

Auch deshalb sind Ausführungsformen des erfindungsgemässen Kabelschutzes mit einer zusätzlichen Dämpfungsschicht aus einem weichen, schlagzähen Kunststoff, z.B. einem Polyamid-Elastomer wie es der Typ Grilamid ELY60® der Fa. EMS-CHEMIE AG, Zürich, darstellt oder aus anderen Polymere mit ähnlichen Eigenschaften besonders vorteilhaft.

Zur Evaluierung geeigneter Armierungsmaterialen wurde ausserdem ein Durchstoss-Versuch in Anlehnung an DIN 53373 (**Fig. 8**) durchgeführt. Es wurde die Durchstossenergie bei Raumtemperatur an 2 mm dicken Platten bestimmt. Die höchsten Durchstossenergien wurden für schlagzähmodifizierte Polyamide gemessen.

| Material | Durchstossenergie |
|---|---|
| Polyurethan | 65 Nm |
| HDPE | 60 Nm |
| TPE | 65 Nm |
| PA 6, nicht modifiziert | 40 Nm |
| PA12, schlagzäh mod. | 120 Nm |
| Grilon XE3501 (PA 6, schlagzähmod.) | 125 Nm |

Die in der Erfindung beschriebenen Armierungskonstruktionen eignen sich nicht nur für optische Nachrichtenkabel mit verseilten Bündeladern wie in Fig. 1 bis 5 dargestellt, sondern auch für Nachrichtenkabel mit einer zentralen Bündelader, einem genuteten Zentralelement, sog. "Slotted Core" und anderen bekannten Kabelkern-Konstruktionen.

Der erfindungsgemässe Kabelschutz zeichnet sich insbesondere durch ein besonders gutes Preis/Leistungsverhältnis aus.

### Bezugszeichenliste:

- AG: Faserarmierungsschicht (Aramidgewebe oder parallele Aramidfäden)
- AM: Polyethylen-Platte
- ASH: Kunststoff-Armierungsschicht
- ÄM: äusserster Mantel
- BS: Bleischrot
- DSH: Dämpfungsschicht
- KK: Kabelkern
- LWL: Lichtwellenleiter
- PPA: Prüfplattenaufnahme
- RP: Referenzplatte
- SG: Schrotgewehr

## Patentansprüche

1. **Mehrschichtiger ballistischer Kabelschutz für optische Nachrichtenkabel,** bestehend aus
- einer äusseren Schutzschicht aus Polyolefin,
- mindestens einer Faser-Armierungsschicht,
- mindestens einer harten Kunststoff-Armierungsschicht,
**dadurch gekennzeichnet, dass**
zusätzlich mindestens eine unter der Faser-Armierungsschicht und unter der harten Kunststoff-Armierungsschicht liegende Dämpfungsschicht aus einem weichen Kunststoff ausgewählt aus der Gruppe Polyamidelastomere, Polyesteralastomere und Polyolefine vorhanden ist,
wobei die harte Kunststoff-Armierungsschicht aus einem schlagzähen oder schlagzäh modifizierten Kunststoff mit einem Zug-E-Modul von 200 bis 2'000 N/mm ², einer Kerbschlagzähigkeit nach Charpy von mindestens10 kJ/m² und einer Durchstossenergie von mindestens 60 Nm, gemessen in Anlehnung an DIN 53 373, besteht.

2. Kabelschutz nach einem der vorhergehenden Ansprüche,
**dadurch gekennzeichnet, dass**
die Faser-Armierungsschicht aus hochfesten Fasern, ausgewählt aus der Gruppe Aramidfasern, Glasfasern, hochfesten Synthesefasern und Kohlenstoff-Fasern, in der Form eines Gewebes oder parallel in Längsrichtung nebeneinanderliegender Fäden, besteht.

3. Kabelschutz nach Anspruch 1,
**dadurch gekennzeichnet, dass**
der schlagzähe oder schlagzäh modifizierte Kunststoff ausgewählt ist aus der Gruppe Polyamide, Polyester, Polyesterelastomere, Polyurethane und ihre Blends.

4. Kabelschutz nach Anspurch 3,
**dadurch gekennzeichnet, dass**
die Blends solche mit anderen Kunststoffen aus der Gruppe der Polyolefine sind.

5. Kabelschutz nach Anspruch **1,**
**dadurch gekennzeichnet, dass**
der weiche Kunststoff schlagzähmodifiziert ist.

6. Kabelschutz nach einem der vorhergehenden Ansprüche,
**dadurch gekennzeichnet, dass**
die Kunststoff-Armierungsschicht mindestens 0,5 mm Wandstärke aufweist.

7. Kabelschutz nach einem der Ansprüche **1** bis **6,**
**dadurch gekennzeichnet, dass**
die Kunststoff-Armierungsschicht mindestens 1,6 mm Wandstärke aufweist.

8. Kabelschutz nach einem der Ansprüche **1** bis **6,**
**dadurch gekennzeichnet, dass**
die unter der Faser-Armierungsschicht liegenden Schichten zusammen mindestens eine Wandstärke von 0,5 mm aufweisen.

## Claims

1. Multi-layer ballistic cable protection for optical communication cables, consisting of
- an outermost protective layer of polyolefin,
- at least one layer of fibre armour,
- at least one layer of hard plastic armour,
**characterized in that**
additionally, under the layer of fibre armour and under the layer of hard plastic armour, there is at least one damping layer made of a soft plastic selected from the group of polyamid elastomers, polyester elastomers and polyolefins,
the layer of hard plastic armour being composed of an impact resistant or impact modified plastic with a tensile elastic modulus of between 200 and 2,000 N/mm², a minimum Charpy impact strength value of 10 kJ/m² and a minimum puncture energy of 60 Nm, measured in accordance with DIN 53 373.

2. Cable protection in accordance with one of the above claims,
**characterized in that**
the layer of fibre armour is composed of high strength fibres selected from the group of aramid fibres, glass fibres, high strength synthetic fibres and carbon fibres, in the form of a braid or of fibres lying longitudinally parallel to each other.

3. Cable protection in accordance with Claim **1**,
**characterized in that**
the impact resistant or impact modified plastic selected comes from the group of polyamids, polyesters, polyester elastomers, polyurethanes or blends of these.

4. Cable protection in accordance with Claim 3,
**characterized in that**
the blends are blends with other plastics of the polyolefin group.

5. Cable protection in accordance with Claim **1**,
**characterized in that**
the soft plastic is impact modified.

6. Cable protection in accordance with one of the above claims,
**characterized in that**
the wall thickness of the layer of plastic armour is at least 0.5 mm.

7. Cable protection in accordance with one of Claims **1** to **6**,
**characterized in that**
the wall thickness of the layer of plastic armour is at least 1.6 mm.

8. Cable protection in accordance with one of Claims **1** to **6**,
**characterized in that**
the wall thickness of the layers lying under the layer of fibre armour is at least 0.5 mm.

## Revendications

1. **Protection de câblage balistique multicouche destinée à des câbles de communication optiques,**
constituée
- d'une couche de protection externe en polyoléfine,
- d'au moins une couche d'armure en fibres,
- d'au moins une couche d'armure en matière synthétique dure,
**caractérisée en ce que**
il y a au moins une couche d'amortissement, placée sous la couche d'armure en fibres et sous la couche d'armure en matière synthétique dure, faite d'une matière synthétique souple choisie dans le groupe des élastomères polyamides, des élastomères polyesters et des polyoléfines,
la couche d'armure en matière synthétique dure étant constituée d'une matière synthétique résiliente ou résiliente modifiée présentant un module d'élasticité en traction compris entre 200 et 2 000 N/mm², un indice de résilience Charpy d'au moins 10kJ/m² et une énergie de perforation d'au moins 60 Nm, mesurée d'après la norme DIN 53 373.

2. Protection de câblage conforme à l'une des revendications précédentes,
**caractérisée en ce que**
la couche d'armure en fibres est constituée de fibres très résistantes provenant du groupe des fibres aramides, des fibres de verre, des fibres de synthèse à résistance élevée et des fibres de carbone, et formant un tissu ou des fils placés parallèlement les uns aux autres dans le sens de la longueur.

3. Protection de câblage conforme à la revendication **1**,
**caractérisée en ce que**
la matière synthétique résiliente ou résiliente modifiée est choisie dans le groupe des polyamides, des polyesters, des élastomères polyesters, des polyuréthanes et de leurs mélanges.

4. Protection de câblage conforme à la revendication 3,
**caractérisée en ce que**
les mélanges sont des mélanges faits avec d'autres matières synthétiques du groupe des polyoléfines.

5. Protection de câblage conforme à la revendication **1**,
**caractérisée en ce que**
la matière synthétique souple est résiliente modifiée.

6. Protection de câblage conforme à l'une des revendications précédentes,
**caractérisée en ce que**
la couche d'armure en matière synthétique présente au moins une épaisseur de 0,5 mm.

7. Protection de câblage conforme à l'une des revendications **1** à **6**,
**caractérisée en ce que**
la couche d'armure en matière synthétique présente au moins une épaisseur de 1,6 mm.

8. Protection de câblage conforme à l'une des revendications **1** à **6**,
**caractérisée en ce que**
les couches situées sous la couche d'armure en fibres présentent ensemble au moins une épaisseur de 0,5 mm.
